# EUROPEAN PATENT SPECIFICATION

(11) **EP 1 578 144 B1**
(45) Date of publication and mention of the grant of the patent: **11.07.2007**
(21) Application number: 04006529.4
(22) Date of filing: 18.03.2004
(51) Int. Cl.: H04Q 1/14

(54) **Modular arrangement in the field of telecommunications**
Modulare Anordnung im Gebiet der Telekommunikation
Ensemble modulaire dans le domaine des télécommunications

(43) Date of publication of application: 21.09.2005
(73) Proprietor: 3M Innovative Properties Company, St. Paul, Minnesota 55133-3427 (US)
(72) Inventor: Denter, Friedrich, 44575 Castrop-Rauxel (DE); Otto, Hans-Dieter, 51688 Wipperfürth (DE); Edelmann, Wolfgang, 42111 Wupprtal (DE); Bund, Christine, 42111 Wuppertal (DE); Perrier, Gaetan, 74410 Saint Jorioz (FR)
(74) Representative: Bergen, Katja

(56) References cited:
- WO-A-02/076109
- WO-A-20/04032533
- DE-A- 10 140 545
- US-A1- 2003 002 641

## Description

### Technical Field

The invention relates to a modular arrangement in the field of telecommunications, and more specifically to an arrangement of three modules which are connectable with each other.

### Background

In the field of telecommunications, numerous customers are connected with the switch or other equipment, such as line terminating equipment or multiplex systems of a telecommunications company, via telecommunications lines. Between the customer and the switch or the other equipment, sections of the telecommunications lines are connected with terminal modules. The terminal modules establish an electrical connection between a wire, which is attached to the terminal module at a first side, and another wire, which is attached to the terminal module at a second side.

In recent years, ADSL-technology has become a widely used technology in the telecommunications field. This technology allows at least two different signals to be transmitted by a single line. This is achieved by transmitting the different signals at different frequencies along the same line. The signals are combined at a particular point in the telecommunications line. The combined signal is divided or split at another point. In particular, at the subscriber side, voice and data signals, which are separate, are combined and sent to the central office via the same line.

In the central office the combined signal is split. For the transmission of voice and data signals to the subscriber, separate voice and data signals are combined at the central office, sent to the subscriber and split at the subscriber side. After splitting the signal, the so-called POTS (plain old telephone service) signal can be used to transmit voice signals, and other parts of the split signal can be used to transmit data, for example. The splitters, which are used to split or combine the signal, can be integrated in a terminal module. This is, e.g., disclosed in WO 2002/076109.

Furthermore, there is sometimes a need to carry out measurements for the connections which are established by terminal modules and the wires connected therewith. For example, measurements can be made between the telephone connection of a customer and the switch of a telecommunications company. Such measurements serve, for example, to test the connection in general, or to localize any disturbances or faults which may have occurred. As disclosed in WO 03/079599, which is assigned to the applicant, a so-called contact bank as well as circuits for providing test and/or monitoring access to telecommunications lines can be connected with a terminal module.

US 2003/0002641 A1 discloses a telecommunications device including a plurality of splitter cards mounted within a chassis. The device further includes a circuit board, a plurality of card edge connectors, POTS connectors, line connectors and data connectors.

DE 101 40 545 A1 is related to a test adapter and a method for testing ADSL-devices. The test adapter may be inserted into disconnection points of a main distribution frame.

Finally, EP 1 122 821 A2 discloses a telecommunications overvoltage protection magazine, which can be mounted to a telecommunications rack. A cable connector is connectable with the overvoltage protection magazine from a rear thereof, and a junction block is connectable with the overvoltage protection magazine from a front thereof.

### Summary of the Invention

The invention provides a modular arrangement in the field of telecommunications which is improved with regard to versatility as well as the separation of, for which different companies might be responsible, from each other, such as areas with electrical connections, in which a DSLAM on the one hand and an exchange on the other hand might be present.

The modular arrangement, firstly, comprises a first contact module which is adapted to be mounted to a carrier in the field of telecommunications and has plural contacts arranged in plural pairs, which are adapted to connect wires therewith. The first contact module can be called a base of the modular arrangement, as it is mountable to a carrier. Such a carrier can be constituted by a backmount frame, which is well known to those skilled in the telecommunications field. In particular, any carriers, such as elongate, trough-like structures as well as parallel rails or profiles can be used. The first contact module can be mountable to such a carrier by suitable mounting structures, such as latching mechanisms. The first contact module comprises contacts, with which, on the one hand, wires are connectable. In a preferred application of the modular arrangement, the wires connected with the first contact module are connected with a digital subscriber line access module (or multiplexer), or DSLAM. As the DSLAM might be provided by a contracting company different from the company owning the network, the first contact module provides a clear separation and/or demarcation point between the network owner and the contracting company. In particular, tests can be made at the first contact module. For example, tests regarding the DSLAM can be made by the contracting company.

The contacts of the first contact module with which wires can be connected are adapted to be electrically connected with contacts of at least one functional module, as described below. At that side of the contacts, where wires can be connected, the contacts of the first contact module can be configured in any suitable manner, such as IDCs (insulation displacement contacts) or wire-wrap contacts. The electrical connection with the contacts of the functional module, as described below, can be established by simply tapping the contacts of the first contact module at a suitable point of the contacts. It should be mentioned that the first contact module comprises plural contacts arranged in plural pairs so that wire pairs which are associated with plural customers or subscribers can be connected with the first contact module. For example, the first contact module can be configured to allow the connection of eight or ten wire pairs on each side thereof. With this configuration, the above-mentioned basis for the modular arrangement can be prepared. The first contact module can be provided as a kind of prefabricated connector which is mountable to a carrier and comprises wires connected with the contacts of the first contact module. As an alternative, the first contact module could be configured to receive a connector including contacts, to which wires are attached. Thus, wires can also be indirectly connected with the contacts of the first contact module with contacts of a connector in between.

As will be described in more detail below, both the functional module and a second contact module of the modular arrangement can be adapted to provide a single-pair connection. In other words, these modules can be associated with a single customer. This enables the modular arrangement to be built up by one functional' module for one customer at a time. In particular, only as many functional and second contact modules as necessary can be fitted to a first contact module serving as a basis for the modular arrangement. Thus, the necessary investments related to functional modules which comprise splitters, for example, can be delayed until there is a specific need. This provides advantages as compared to known, inflexible modules which comprise as many splitter circuits as customers are provided on a particular module, even though not all of those customers use ADSL service. For example, in the case of a standard module, with which eight or ten customers can be served, investments relating to splitter circuits, which are necessary for the same number of customers, are required at the time a splitter is required for the first such customer. In contrast, the modular arrangement according to the invention can be built up step by step with corresponding incremental investments.

As indicated above, the modular arrangement furthermore comprises at least one functional module which is fittable to the first contact module. The functional module can comprise one or more splitter circuits to effectuate the above-mentioned function in connection with asymmetric digital subscriber line, or ADSL, technology. Alternatively or additionally, the functional module can comprise one or more test and/or monitoring circuits for testing and monitoring the telecommunication lines. The functional module can be configured as a single-pair module so that the modular arrangement can be built up step by step, as described above. Furthermore, the provision of at least one functional module independent from the first and second contact module, as described in more detail below, enhances the flexibility with regard to the service, which is to be provided. For example, ADSL-technology and its variations are known by other names, such as ADSL, VDSL, SDSL and so on. These services can require different types of splitter circuits so that a change of service, even for a single customer, can be realized by simply exchanging the functional module. Thus, the modular arrangement comprising at least one functional module can be flexibly adapted to such changes. Furthermore, the functional module can include protection components, such as overvoltage and/or overcurrent protectors. The functional module can also have the function of acting as a spacer. In other words, the functional module does not necessary have to include electrical components but might merely serve to bridge a gap between the first and the second contact module in order to allow the mounting of the second contact module at a desired level.

The functional module, furthermore, comprises at least two pairs of contacts with at least one pair of contacts being electrically connectable with at least one pair of contacts of the first contact module. This is achieved by fitting the functional module to the first contact module. The provision of at least two pairs of contacts takes into account the fact that the functional module can be configured as a single-pair module and is fittable to the first contact module, and fittable to a second contact module as described in more detail below. Thus, at least one pair of contacts of the functional module is connectable with a pair of contacts of the first contact module. This connection is also disconnectable or separable by removing the functional module from the contact module so that great versatility is achieved.

Furthermore, the modular arrangement comprises at least one second contact module. The second contact module is configured so as to be fittable to the functional module and comprises at least one pair of contacts which are electrically connectable with a pair of contacts of the functional module, by fitting the second contact module to the functional module. As described above with regard to the functional module, the second contact module can also be configured as a single-pair module by providing the second contact module with a single pair of contacts. These contacts are connectable with contacts of the functional module, and are adapted to connect wires therewith. Thus, the second contact module can be considered to constitute an incoming or an outgoing side of the modular arrangement. In particular, when the functional module is formed as a splitter module, the second contact module can have those contacts with which POTS-wires on the one hand and line-wires on the other hand are connectable. In this case, DSLAM-wires can be connectable with the contacts of the first contact module. In the context of connecting wires with the contacts of the second contact module, these contacts can be configured in any suitable manner, such as IDCs (insulation displacement contacts) or wire-wrap contacts. The electrical connection between the contacts of the second contact module and the contacts of the functional module can be established by tapping the contacts of the second contact module at suitable locations. Tapping the contacts, for example, means that any type of physical and, thus, electrical contact is established.

The aspect of fitting the functional module to the first contact module and fitting the second contact module to the functional module, respectively, can be done by suitable structures, such as latching mechanisms or portions of the modules, which are at least partially complementary, so that a mechanical connection can be established. Furthermore, fitting the above-described modules to other modules can also be called interconnecting, mounting or attaching and, for example, implies that there is a suitable type of mechanical connection. Furthermore, the functional module and the second contact module could be integrated with each other. In other words, these two modules could, for example, have a common housing of plastic or any other suitable material. When the second contact module is adapted to connect POTS-wires on the one hand and line-wires on the other hand, therewith, a lifeline can be established by disconnecting the second contact module from the functional module. In this case, the POTS-wires and the line-wires are directly connected with each other without involving the functional module. In particular, when problems arise in the functional module, this configuration advantageously allows a lifeline service to be established and maintained.

The first contact module of the modular arrangement can comprise one or more separation or disconnection points. Such a point or zone can be provided by two contacts which are in contact with each other in a flexible manner so that, in a first state, they establish an electrical connection. In a second state, the electrical connection can be separated or disconnected by moving at least portions of the contacts away from each other. In other words, the contacts are biased towards a first state, in which they are in contact with each other. When the object or force which keeps the contacts apart is removed, the contacts return to their connected state due to their being biased toward each other. In the first contact module, contacts of different pairs can be electrically connected at such a disconnection point. In this context, the term "pair of contacts" is used for two contacts, which are usually arranged adjacent each other and allow the connection of a wire pair from a particular side, such as the line-, POTS- or DSLAM-side. The above-described disconnection point is established with contacts of another pair, namely a pair of contacts of the other side. In particular, the line-side can be called the "other" side with regard to the POTS-side in the second contact module. In the first contact module, where one side can be used as the DSLAM-side, the "other" side can be used for establishing a connection to ground. Between these sides, the mentioned disconnection point can be established. In particular, the pair of contacts of the functional module, which is connectable with contacts of the first contact module, can be connected therewith at the above-described disconnection point of the first contact module. This can, for example, be realized by inserting a portion of the functional module between the contacts, which form a disconnection point between them.

As regards the optional connection, which can be established at the side other than the DSLAM-side of the first contact module, this option can be used for a connection to ground. In this manner, a ground connection for shielding components which reduce crosstalk, and/or protection components, such as overvoltage or overcurrent protectors, can be provided. The above-described disconnection point in the first contact module can advantageously be used as a demarcation point between a first company owning the telecommunications network and a second, contracting company, which is in charge of the DSLAM. Generally, as described above, both the first and the second contact module can be configured similar to a disconnection strip, in which contacts contact each other in a separable manner. However, these modules could also be provided with contacts, which, in an initial state, do not contact each other and essentially require the insertion of contacts of another module so as to establish the desired electrical connections.

The functional module can comprise at least one printed circuit board (PCB). The PCB can be provided with the necessary electrical connections, electrical components, such as filters in the case of splitter circuits, and any switches, such as in the case of test and monitoring circuits. The PCB can, furthermore, carry those contacts of the functional module, which are adapted to be electrically connected with the contacts of the first and second contact module. For this purpose, the PCB can at least partially extend to the outside of a housing of the functional module.

The functional module can, in order to perform those functions indicated above, comprise at least one electrical circuit, which can be found on a PCB, and can comprise more than one PCB.

The electrical circuit can be a splitter circuit including the necessary filters to provide the function of splitting or combining the signal for ADSL-technology.

Furthermore, the electrical circuit of the functional module can be a test and/or monitoring circuit to allow testing or monitoring to be performed. In this context, reference is made to WO 03/079599 of the applicant as well as the application entitled "Circuit and Method for Providing Test and/or Monitoring Access" filed by the applicant on the same day as the present application. These documents contain details regarding test and/or monitoring circuits which can be applied to the functional module of the subject matter of the present application. This disclosure is incorporated herein by reference.

The PCB of the functional module can, furthermore, be used to provide further connection by means of suitable connectors, such as a sub-D-interface. In this manner, any other suitable equipment can be connected with the functional module as well as the modular arrangement as a whole. By such a connector a bus can be connected with the module.
This can, for example, be used when a test and/or measurement access is established to the functional module wherein a bus connects the functional module with a control module as described in more detail below. Furthermore, a control component can be connected with the functional module by the described connector. Finally, also one or more POTS and/or line wires can be connected with the functional module by the described connector.

The functional module can also comprise at least one protection component such as an overvoltage and/or overcurrent protector. In this modification, plural functions can be provided on the functional module. In particular, the functional module can be configured in a versatile manner in accordance with the specific needs by comprising any types of electrical circuits and protection components. In particular, in the case of protection components being accommodated in the functional module, the functional module can lack a PCB, and the electrical connection can be established by contacts extending from the protection components to the other modules.

Further advantages are provided by a functional module that comprises at least one grounding member. For example, a grounding member, such as a grounding plate, can be provided to cover electrical components and guide any induced current to ground. Furthermore, the grounding member can be connected with one or more protection components to guide current to ground in the case of overvoltage, for example.

In a similar manner as the first contact module, the second contact module can also comprise at least one disconnection point. In particular, contacts of different pairs (i.e. contacts of different sides of the module, as described above) can electrically be connected at a disconnection point. At such a disconnection point, the electrical connection with the functional module can be established. When POTS-wires on the one hand and line-wires on the other hand are connected with the second contact module, a lifeline service can be established by removing the second contact module from the functional module, for example, in the case of problems occurring in the electronic equipment of the functional module. In such a situation, the disconnection point, which used to be disconnected by the functional module to allow the circuits of the functional module to perform their function, will be connected, and a direct connection between POTS and line-side line can be established.

As regards the general structure of the second contact module, the contacts thereof can be accessible at a front, and the first disconnection point of the second contact module can be accessible from a rear. Thus, wires can be connected with the second contact module at a front thereof, whereas the connection with the functional module can be established at a rear. This allows any necessary installation work for changes of connections to be conducted in an easy and reliable manner at the front of the module.

The contact module can comprise a second disconnection point, which is accessible from a front thereof. This advantageously allows a disconnection plug to be inserted from the front of the module to disconnect the line side. Furthermore, measurements or tests can in this case be performed in the direction of the line, for example, the direction of the customer.

In the case where the functional module comprises a single disconnection point, the first and second contact modules can be of the same or of a similar configuration. A similar configuration can imply the fact that the first contact module comprises plural pairs of contacts, whereas the second contact module can be configured as a single-pair module. However, the general structure can still be very similar, as the second contact module can be seen as a part or portion of the first contact module, particularly with the shape of the contacts, the structure of the disconnection points, etc. being the same. First and second contact modules of the same configuration can be used if the second contact module is provided in an embodiment comprising plural pairs of contacts. This type of identical or similar module generally simplifies the structure and leads to economical advantages.

The modular arrangement as a whole can further comprise at least one PCB to which at least one first contact module is connectable. In particular, plural first contact modules can be connectable with the PCB which can be provided as a type of a back plane arranged in parallel with a telecommunication carrier, such as a back mount frame. Thus, plural first contact modules as well as plural modular arrangements, as described above, can be connected with each other. Such a structure can advantageously be provided in a situation where test and monitoring access to plural modules is to be established. In this case, at least one modular arrangement as described above can be provided as a control module controlling the testing and monitoring of plural modules. However, a bus cable can be provided instead of or in addition to a printed circuit board.

The modular arrangement can further comprise at least one protection module, which can be fitted to the second contact module. The protection module can be formed as a single pair protection plug or a protection magazine that includes protection components for plural lines. As the structure at the front of the second contact module, including exposed contacts to connect wires therewith and a disconnection point, which is accessible from the front, can correspond to that of standard telecommunications modules, not related to the context of the modular arrangement described herein, the structure of the protection module will be apparent to those skilled in the art. In particular, a primary protection can be provided separately from a secondary protection as described in EP 03 004 371 assigned to the Applicant, the contents of which are incorporated herein by reference. It should also be mentioned that a test plug or a so-called dummy plug can be combined with the modular arrangement instead of or in addition to the protection module described above.

Whereas the carrier, to which the first contact module can be mounted, does not constitute a part of the modular arrangement in its basic form, the modular arrangement can be combined therewith so as to provide an improved structure in the field of telecommunications.

### Brief Description of the Drawings

Hereinafter the invention will be described by means of nonlimiting examples thereof with reference to the drawings, in which:
Fig. 1 shows a perspective, schematic top view of a first embodiment of the modular arrangement;
Fig. 2 shows a sectional view of an arrangement including that of Fig. 1;
Fig. 3 shows a sectional view of an arrangement including that of Fig. 1 in a fitted state;
Fig. 4 shows a sectional view of a modular arrangement in a second embodiment; and
Fig. 5 shows a sectional view of the arrangement of Fig. 4 in a fitted state.

### Description of Preferred Embodiments of the Invention.

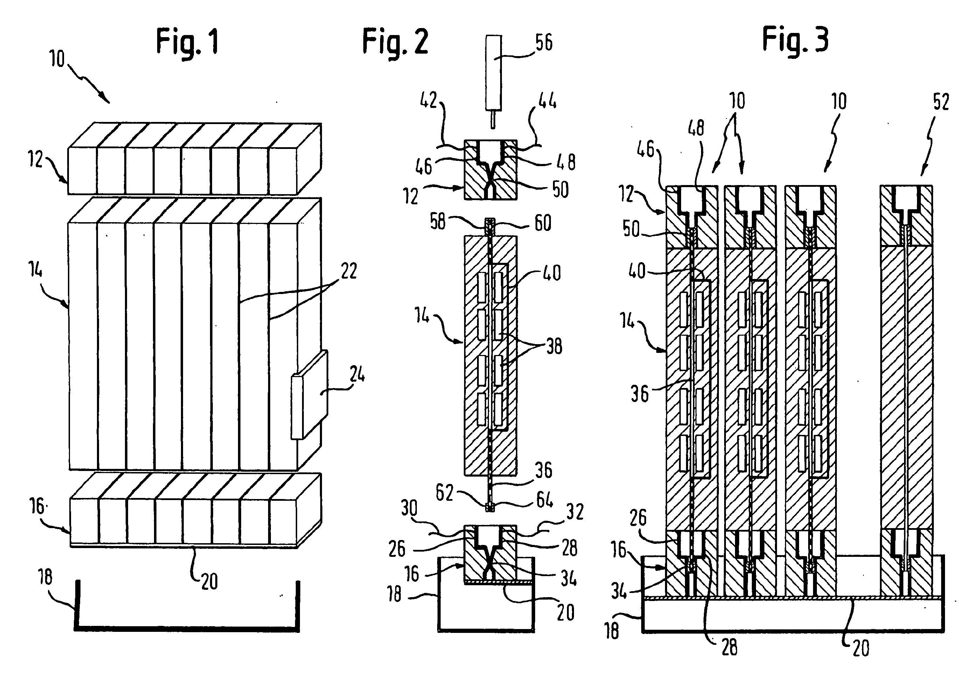

Fig. 1 shows the modular arrangement 10 in a top schematic view. For the sake of clarity, details of the attachment of a second contact module 12 to a functional module 14 as well as the attachment of the functional module 14 to a first contact module 16 and, finally, the attachment of the first contact module 16 to a carrier, such as a trough-like back mount frame 18, are omitted. However, those skilled in the art will be aware how the corresponding mounting structures can be formed. Furthermore, reference can be made to those types of structures mentioned above.

As Fig. 1 shows, the modular arrangement 10 is formed by fitting the mentioned modules to each other with the second contact module 12 usually being oriented toward the front of the arrangement when the arrangement is in use. At the rear of the modular arrangement 10, the first contact module 16 is mounted to the carrier 18. In the embodiment shown, the first contact module 16 is connected with a printed circuit board (PCB) 20 as described in more detail below. In the embodiment shown, the functional module 14 has the same width and will in this case be adapted to serve the same number of customers as the first contact module 16. However, as indicated by partitions 22, the functional module could also be a single pair module, which is adapted to serve a single customer. In the embodiment shown, there is one functional module 14 having approximately the same width as the first contact module 16. However, the partitions 12 are intended to indicate that plural smaller functional modules 14 could be provided. In this embodiment, the modular arrangement could be built up step by step by adding functional modules 14 as the need arises. In the embodiment shown, the functional module, furthermore, comprises a connector 24, such as a sub-D-interface. This is particularly relevant when the functional module 14 serves as a test and monitoring module. When the functional module is a splitter module, the connector 24 and PCB 20 can be omitted.

As can be taken from the top of Fig. 1, the second contact module 12 is fittable to the functional module 14. In the embodiment shown, the second contact module 12 is also a multiple pair module. However, the second contact module 12 could also be configured as a single pair module to form the modular arrangement step by step. As schematically shown in Figure 1, all modules 12, 14, 16 can comprise a housing usually made of insulating material, such as plastic. In the interior thereof, certain components, as shown in the further figures and described in more detail below, are accommodated. Certain components, such as contacts, can be exposed so as to allow the connection of wires therewith, or can extend from the module in order to be electrically connected with contacts of another module. Modules of this general type are sold by Quante/3M Telecommunications of Neuss Germany under the designation SID.

Fig. 2, again, schematically shows a side view of the interior of the modular arrangement. In the embodiment shown, the PCB 20 extends along the carrier 18. The first contact module 16 including the PCB 20 is mounted to the carrier 18. The first contact module 16 comprises plural contacts 26, 28, two of which are visible in the drawings. Since the first contact module can be configured as a strip-like module, as can be taken from Fig. 1, the contacts 26, 28 can be arranged in rows with the rows extending perpendicular to the plane of the drawing of Fig. 2. Adjacent contacts of one and the same row can be considered a pair of contacts, as they allow the connection of the wires of a wire pair therewith. Opposing contacts, such as the contacts 26 and 28 in Fig. 2, can be called associated contacts, as they cooperate to transmit a signal from wire 30 via contacts 26 and 28 to a wire 32 in the state shown in Fig. 2. However, this is not a usual state when in use, as the contacts 26, 28 will, in use, be disconnected from each other at disconnection point 34, as shown in Fig. 3. This is achieved by inserting functional module 14, in particular a portion of a PCB 36 thereof, which extends outside a housing of the functional module 14, between the contacts 28, 26 at disconnection point 34. Thus in the illustrated embodiment, the circuit (insofar as wires 30 and 32 are concerned) is closed when no module is present to hold the contacts apart, and open when a module is present to hold the contacts apart.

In Fig. 2, a state in which the functional module 14 is not fitted to the first contact module 16, is shown. Fig. 2 schematically shows the general structure of the functional module 14 including a PCB 36, which extends from the functional module both at a rear and a front thereof. In the embodiment shown, the functional module 14 comprises a single PCB 36. However, there can be two or more PCBs, at least some of which can extend from the functional module at the rear and front thereof. As schematically shown, electronic components 38 are mounted to the PCB 36 to perform the necessary electronic functions, such as splitting a signal which is done by suitable filters, or providing test and monitoring access to the wires 30, 32. In the embodiment shown, a grounding plate 40 is provided to guide any induced current to ground.

The structure of the second contact module 12 at a front of the modular arrangement generally corresponds to that of the first contact module 16. In particular, wires 42 and 44 are connected with contacts 46 and 48, which are exposed at a front of the second contact module 12. In the state shown, the signal is transmitted from wire 42 to wire 44 by means of contacts 46 and 48, which are in contact with each other at disconnection point 50. In the state shown, the functional module 14 is not in use. The situation shown in Fig. 2 can arise when there are problems with the functional module 14. In this case, a lifeline service, which is sometimes desired, can be achieved provided the wire 42 (as well as an adjacent wire that is not visible in Fig. 2) is connected with POTS, and the wire 44 (as well as an adjacent wire, which is not visible in Fig. 2) is connected with line. The mentioned connection with POTs indicates a connection to the exchange of a telecommunications company. The connection with line indicates a connection to the subscriber or customer. For the embodiment of Fig. 2, a protection plug 56 is shown in addition which is insertable into the second contact module 12 at the disconnection point 50 thereof in order to protect any equipment which is connected with wires 42 and 44 from overvoltage and/or overcurrent. The protection plug 56 is non-conductive, and thus has the effect of providing an open circuit by preventing signal transmission at disconnection point 50.

In Fig. 3 the modular arrangement of Fig. 2 (without the protection plug 52) is shown in the assembled state. As can be taken from the top of Fig. 3, the portion of the PCB 36 of the functional module 14 extending towards the second contact module 12 is inserted into the second contact module 12 from a rear thereof in a manner to disconnect contacts 46 and 48 from each other at the disconnection point 50. This disconnection generally serves to guide a signal which comes in from the line side via wire 44, to the functional module 14, in order to split the signal. For this purpose the portion of the PCB 36 of the functional module 14, which extends from the functional module 14, is provided with suitable contacts 58, 60. In the functional module 14, the signal is split (in this example, though it could be combined with a signal received from contact 26 by suitable filters, and a first part of the signal is guided to contact 46. In particular, when POTS-wires are connected with the contact 46 (as well as adjacent contacts not visible in the drawing) the POTS signal is guided to these contacts.

Furthermore, in a typical situation, wire 30 (see Fig. 2) as well as adjacent wires, can be connected with a digital subscriber line access module (or multiplexer) (DSLAM) so that the DSLAM-part of the combined signal can be guided to contact 26 by suitable connections in the functional module 14, in particular the PCB 36 thereof. For this purpose, the PCB 36 again comprises contacts 62, 64 at the exposed part thereof, to establish electrical connection with contacts 26 and 28 of the first contact module 16. In a similar manner as with the second contact module 12, this connection is established by inserting the exposed portion of the PCB 36 between the contacts 26 and 28 at disconnection point 34 thereof. As regards contact 28, this contact can, for example, be used as a grounding contact. In this case, the grounding member 40 of the functional module 14 can be connected with contact 28.

The above description is related to a situation when the functional module 14 is configured as a splitter module. However, Fig. 3 is also applicable to a situation when the functional module 14 serves as a test and monitoring module. Particularly in such a case, plural arrangements 10 are connected with the PCB 20, and a special type of module, namely a control module 52 is also connected with the PCB 20 to control any switches or similar components which might be present in the functional modules 14 to achieve a test and monitoring access. As can be taken from Fig. 3, the general structure of the control module 52 can correspond to that of the modular arrangement 10. However, the control module 52 can also have a different structure.

In particular, the control module 52 can comprise suitable control circuits. Furthermore, the modular arrangements 10 could be called access modules, as these are accessed in order to conduct tests and/or measurements.

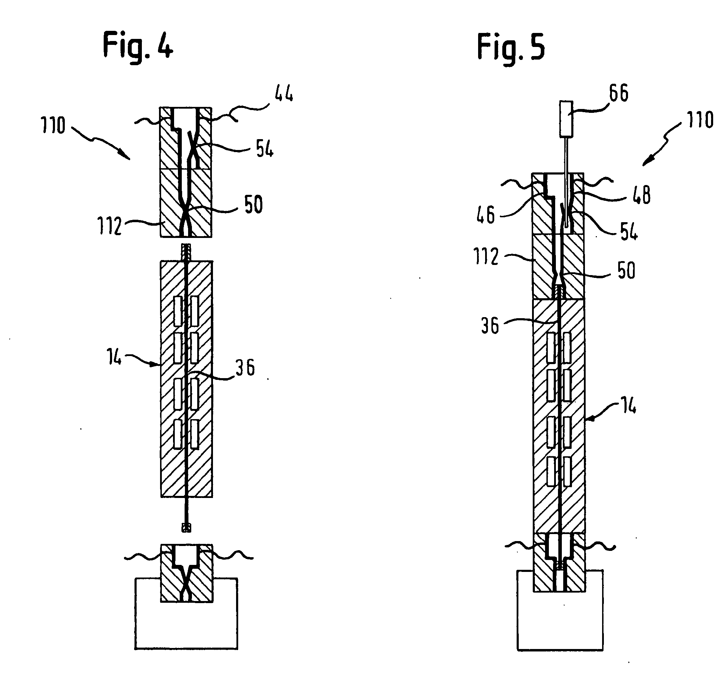

Fig. 4 shows a second embodiment 110 of a modular arrangement, in which a modification of the second contact module 112 is used with the remaining parts being generally the same as described previously. As can be seen from the top of Fig. 4, the second contact module 112 comprises a first disconnection point 50, which is accessible from a rear thereof and corresponds to the separation point 50 of the second contact module 12 of the first embodiment. However, the embodiment of Fig. 4 comprises an additional disconnection point 54, which is accessible from a front of the module. This, e.g., allows line side wires 44 to be disconnected. Furthermore, when a test plug is inserted into disconnection point 54, tests and measurements can be carried out in the direction of the line, (i.e., towards the customer). In particular, this is shown in Fig. 5 with a test plug 66 inserted at the disconnection point 54.
Regarding this disconnection point 54, it should be mentioned, that an alternative or additional disconnection point could be provided on the side of contact 46 instead of or in addition to the side of contact 48, as shown ,in Fig. 5.

Finally, Fig. 5 shows the modular arrangement 110 of Fig. 4 in the fitted or an interconnected state. In a manner corresponding to that of Fig. 3, the various modules are connected with each other. In particular, the part of the PCB 36 of the functional module 14, which extends towards the second contact module 112, is inserted at the connection point 50 to provide the desired electrical connections. Also in the interconnected state, the second disconnection point 54 is accessible from the front of the arrangement and can be used for disconnecting, testing and measuring as described above.

## Claims

1. A modular arrangement (10, 110) in the field of telecommunications comprising:
a first contact module (16) adapted to be mounted to a carrier (18) in the field of telecommunications and having plural contacts (26, 28) arranged in plural pairs, which are adapted to connect wires (30, 32) therewith,
at least one functional module (14) fittable to the first contact module (16) at a point in time after mounting the first contact module (16) to the carrier (18) and comprising at least two pairs of contacts (58, 60, 62, 64), at least one pair (62, 64) of which is electrically connectable with at least one pair of contacts (26, 28) of the first contact module (16) by fitting the functional module (14) to the first contact module (16), and
at least one second contact module (12, 112) fittable to the functional module (14) at a point in time after fitting the functional module (14) to the first contact module (16) and comprising at least one pair of contacts (46, 48), which are electrically connectable with a pair of contacts (58, 60) of the functional module (14) by fitting the second contact module (12, 112) to the functional module (14), the contacts (46, 48) of the second contact module (12, 112) further being adapted to connect wires (42, 44)therewith.

2. The arrangement in accordance with claim 1, wherein contacts (26, 28) of different pairs of the first contact module (16) are electrically connectable at a disconnection point (34), the at least one pair of contacts (62, 64) of the functional module (14) being connectable with the at least one pair of contacts of the first contact module (16) at the disconnection point (34).

3. The arrangement in accordance with claim 1 or 2, wherein the functional module (14) further comprises at least one PCB (36).

4. The arrangement in accordance with any one of claims 1 to 3, wherein the functional module (14) comprises at least one electrical circuit.

5. The arrangement in accordance with any one of claims 1 to 4, wherein the functional module (14) comprises at least one splitter circuit.

6. The arrangement in accordance with any or one of claims 1 to 5, wherein the functional module (14) comprises at least one test and/or monitoring circuit.

7. The arrangement in accordance with any one of claims 1 to 6, wherein the functional module (14) comprises a connector, such as a sub-D-interface (24).

8. The arrangement in accordance with any one of claims 1 to 7, wherein the functional module (14) comprises at least one protection component, such as an overvoltage and/or an overcurrent protection component.

9. The arrangement in accordance with any one of claims 1 to 8, wherein the functional module (14) comprises at least one grounding member (40).

10. The arrangement in accordance with any one of claims 1 to 9, wherein contacts (46, 48) of different pairs of the second contact module (12, 112) are electrically connectable at at least one disconnection point (50, 54), the at least one pair of contacts (58, 60) of the functional module (14) being connected with at least one pair of contacts (46, 48) of the second contact module (12, 112) at the disconnection point (50).

11. The arrangement in accordance with claim 10, wherein the contacts (46, 48) of the second contact module (12, 112) are exposed at a front, a first disconnection point (50) being accessible from a rear of the module.

12. The arrangement in accordance with claim 10 or 11, wherein a second disconnection point (54) is accessible from a front of the module.

13. The arrangement in accordance with any one of claims 1 to 12, wherein the second contact module (12) is configured identical or similar to the first contact module (16).

14. The arrangement in accordance with any one of claims 1 to 13, further comprising at least one PCB (20) to which at least one first contact module (16) is connectable.

15. The arrangement in accordance with any one of claims 1 to 14, further comprising at least one protection module (56) suitable to be fitted to the second contact module (12, 112).

16. The arrangement in accordance with any one of claims 1 to 15, further comprising a carrier (18).

## Patentansprüche

1. Modulare Anordnung (10, 110) auf dem Telekommunikationsgebiet, mit folgendem:
einem ersten Kontaktmodul (16) zur Befestigung an einem Träger (18) auf dem Telekommunikationsgebiet und mit mehreren in mehreren Paaren angeordneten Kontakten (26, 28), die zur Verbindung von Drähten (30, 32) damit geeignet sind,
mindestens einem Funktionsmodul (14), das an den ersten Kontaktmodul (16) zu einem Zeitpunkt nach der Befestigung des ersten Kontaktmoduls (16) an den Träger (18) anbringbar ist und mindestens zwei Paare von Kontakten (58, 60, 62, 64) aufweist, von denen mindestens ein Paar (62, 64) elektrisch mit mindestens einem Paar von Kontakten (26, 28) des ersten Kontaktmoduls (16) durch Anbringen des Funktionsmoduls (14) an dem ersten Kontaktmodul (16) verbindbar ist, und
mindestens einem zweiten Kontaktmodul (12, 112), das an dem Funktionsmodul (14) zu einem Zeitpunkt nach dem Anbringen des Funktionsmoduls (14) an den ersten Kontaktmodul (16) anbringbar ist und mindestens ein Paar von Kontakten (46, 48) aufweist, die elektrisch mit einem Paar von Kontakten (58, 60) des Funktionsmoduls (14) durch Anbringen des zweiten Kontaktmoduls (12, 112) an das Funktionsmodul (14) verbindbar sind, wobei die Kontakte (46, 48) des zweiten Kontaktmoduls (12, 112) weiterhin zur Verbindung von Drähten (42, 44) damit geeignet sind.

2. Anordnung nach Anspruch 1, wobei Kontakte (26, 28) unterschiedlicher Paare des ersten Kontaktmoduls (16) elektrisch an einem Trennpunkt (34) verbindbar sind, wobei das mindestens eine Paar von Kontakten (62, 64) des Funktionsmoduls (14) mit dem mindestens einen Paar von Kontakten des ersten Kontaktmoduls (16) an dem Trennpunkt (34) verbindbar ist.

3. Anordnung nach Anspruch 1 oder 2, wobei das Funktionsmodul (14) ferner mindestens eine Leiterplatte (36) aufweist.

4. Anordnung nach einem der Ansprüche 1 bis 3, wobei das Funktionsmodul (14) mindestens eine elektrische Schaltung aufweist.

5. Anordnung nach einem der Ansprüche 1 bis 4, wobei das Funktionsmodul (14) mindestens eine Verteilerschaltung aufweist.

6. Anordnung nach einem beliebigen oder einem der Ansprüche 1 bis 5, wobei das Funktionsmodul (14) mindestens eine Prüf- und/oder Überwachungsschaltung aufweist

7. Anordnung nach einem der Ansprüche 1 bis 6, wobei das Funktionsmodul (14) einen Verbinder wie beispielsweise eine Sub-D-Schnittstelle (24) aufweist.

8. Anordnung nach einem der Ansprüche 1 bis 7, wobei das Funktionsmodul (14) mindestens einen Schutzbauteil wie beispielsweise einen Überspannungs-und/oder einen Überstrom-Schutzbauteil aufweist.

9. Anordnung nach einem der Ansprüche 1 bis 8, wobei das Funktionsmodul (14) mindestens ein Erdungsglied (40) aufweist.

10. Anordnung nach einem der Ansprüche 1 bis 9, wobei Kontakte (46, 48) unterschiedlicher Paare des zweiten Kontaktmoduls (12, 112) elektrisch mit mindestens einem Trennpunkt (50, 54) verbindbar sind, wobei das mindestens eine Paar von Kontakten (58, 60) des Funktionsmoduls (14) mit mindestens einem Paar von Kontakten (46, 48) des zweiten Kontaktmoduls (12, 112) am Trennpunkt (50) verbunden ist.

11. Anordnung nach Anspruch 10, wobei die Kontakte (46, 48) des zweiten Kontaktmoduls (12, 112) an einer Vorderseite freigelegt sind, wobei ein erster Trennpunkt (50) von einer Rückseite des Moduls zugänglich ist.

12. Anordnung nach Anspruch 10 oder 11, wobei ein zweiter Trennpunkt (54) von einer Vorderseite des Moduls zugänglich ist.

13. Anordnung nach einem der Ansprüche 1 bis 12, wobei das zweite Kontaktmodul (12) gleichartig oder ähnlich wie das erste Kontaktmodul (16) konfiguriert ist.

14. Anordnung nach einem der Ansprüche 1 bis 13, ferner aufweisend mindestens eine Leiterplatte (20), mit der mindestens ein erstes Kontaktmodul (16) verbindbar ist.

15. Anordnung nach einem der Ansprüche 1 bis 14, ferner aufweisend mindestens ein Schutzmodul (56), das zur Anbringung an dem zweiten Kontaktmodul (12, 112) geeignet ist.

16. Anordnung nach einem der Ansprüche 1 bis 15, ferner aufweisend einen Träger (18).

## Revendications

1. Agencement modulaire (10, 110) dans le domaine des télécommunications comprenant :
un premier module de contact (16) adapté pour être monté sur un support (18) dans le domaine des télécommunications et comportant plusieurs contacts (26, 28) agencés en plusieurs paires, qui sont adaptés pour connecter des fils (30, 32) avec celui-ci ;
au moins un module fonctionnel (14) pouvant être assujetti au premier module de contact (16) à un point dans le temps après le montage du premier module de contact (16) sur le support (18) et comprenant au moins deux paires de contacts (58, 60, 62, 64), dont au moins une paire (62, 64) peut être connectée électriquement à au moins une paire de contacts (26, 28) du premier module de contact (16) en assujettissant le module fonctionnel (14) au premier module de contact (16), et
au moins un second module de contact (12, 112) pouvant être assujetti au module fonctionnel (14) à un point dans le temps après l'assujettissement du module fonctionnel (14) au premier module de contact (16) et comprenant au moins une paire de contacts (46, 48), qui peuvent être connectés électriquement à une paire de contacts (58, 60) du module fonctionnel (14) en assujettissant le second module de contact (12, 112) au module fonctionnel (14), les contacts (46, 48) du second module de contact (12, 112) étant adapté en outre pour connecter des fils (42, 44) à celui-ci.

2. Agencement selon la revendication 1, dans lequel des contacts (26, 28) de différentes paires du premier module de contact (16) peuvent être connectés électriquement au niveau d'un point de déconnexion (34), l'au moins une paire de contacts (62, 64) du module fonctionnel (14) pouvant être connectée à l'au moins une paire de contacts du premier module de contact (16) au niveau du point de déconnexion (34).

3. Agencement selon la revendication 1 ou 2, dans lequel le module fonctionnel (14) comprend en outre au moins une PCB (36).

4. Agencement selon l'une quelconque des revendications 1 à 3, dans lequel le module fonctionnel (14) comprend au moins un circuit électrique.

5. Agencement selon l'une quelconque des revendications 1 à 4, dans lequel le module fonctionnel (14) comprend au moins un circuit diviseur.

6. Agencement selon l'une quelconque des revendications 1 à 5, dans lequel le module fonctionnel (14) comprend au moins un circuit de test et/ou contrôle.

7. Agencement selon l'une quelconque des revendications 1 à 6, dans lequel le module fonctionnel (14) comprend un connecteur, tel qu'une sous-interface D (24) .

8. Agencement selon l'une quelconque des revendications 1 à 7, dans lequel le module fonctionnel (14) comprend au moins un composant de protection, tel qu'un composant de protection contre les surtensions et/ou les surintensités.

9. Agencement selon l'une quelconque des revendications 1 à 8, dans lequel le module fonctionnel (14) comprend au moins un élément de mise à la masse (40).

10. Agencement selon l'une quelconque des revendications 1 à 9, dans lequel des contacts (46, 48) de différentes paires du second module de contact (12, 112) peuvent être connectés électriquement au moins à un point de déconnexion (50, 54), l'au moins une paire de contacts (58, 60) du module fonctionnel (14) pouvant être connectée à l'au moins une paire de contacts (46, 48) du second module de contact (12, 112) au niveau du point de déconnexion (50).

11. Agencement selon la revendication 10, dans lequel les contacts (46, 48) du second module de contact (12, 112) sont exposés au niveau d'une partie avant, un premier point de déconnexion (50) étant accessible depuis une partie arrière du module.

12. Agencement selon la revendication 10 ou 11, dans lequel un second point de déconnexion (54) est accessible depuis une partie avant du module.

13. Agencement selon l'une quelconque des revendications 1 à 12, dans lequel le second module de contact (12) est configuré de façon identique ou semblable au premier module de contact (16).

14. Agencement selon l'une quelconque des revendications 1 à 13, comprenant en outre au moins une PCB (20) à laquelle au moins un premier module de contact (16) peut être connecté.

15. Agencement selon l'une quelconque des revendications 1 à 14, comprenant en outre au moins un module de protection (56) pouvant être assujetti au second module de contact (12, 112).

16. Agencement selon l'une quelconque des revendications 1 à 15, comprenant en outre un support (18) .
